# EUROPEAN PATENT APPLICATION

(11) **EP 2 101 553 A2**
(43) Date of publication of application: **16.09.2009**
(21) Application number: 08103554.5
(22) Date of filing: 15.04.2008
(51) Int. Cl.: H05K 7/00

(54) **Electronic device**

(30) Priority: 10.03.2008 TW 97108396
(71) Applicant: QISDA Corporation, Gueishan Hsiang T'ao yuan (TW)
(72) Inventor: Yeh, Chung, Taipei City 112 (TW)
(74) Representative: Lang, Christian

(57) **Abstract**

An electronic device includes a body having first and second accommodating chambers and a sliding slot, a first coupling portion disposed on a bottom of the slot, and a cover including a second coupling portion disposed on an inner wall of the cover and slidable inside the slot. When the cover is closed relative to the body, the cover covers the first and second accommodating chambers. When the cover slides in the slot along a first direction, the second coupling portion interferes and is positioned with the first coupling portion such that the first accommodating chamber is exposed out of the cover and the second accommodating chamber is covered. When the cover continues to slide along the first direction, the second coupling portion passes the first coupling portion such that the cover is removable from the body and the first and second accommodating chambers are exposed out of the cover.

## Description

This application claims the benefit of Taiwan application Serial No. 97108396, filed March 10, 2008, the subject matter of which is incorporated herein by reference.

### BACKGROUND OF THE INVENTION

### Field of the Invention

The invention relates in general to an electronic device, and more particularly to an electronic device having accommodating chambers.

### Description of the Related Art

With the coming of the age of the consumer electronic product and the rapid development of the wireless technology, the functions of the small portable electronic product are getting more and more powerful, and the number of the peripheral products that can be connected to the portable electronic product is gradually increased. Taking a bluetooth earphone as an example, it is advantageously light and handy and does not need to be held by a hand when making or answering a phone call. So, the bluetooth earphone has almost become a standard optional equipment for the present new generation of mobile telephones.

When the user does not use the bluetooth earphone, an accommodating chamber for accommodating the earphone on the mobile telephone is frequently achieved by forming an engaging structure corresponding to the bluetooth earphone on a casing of the mobile telephone, as disclosed in Taiwan Patent No. M306430 and M292218. However, such a design has the drawback that the bluetooth earphone tends to be detached from the mobile telephone when the bluetooth earphone is touched.

Therefore, it is necessary to design a safe accommodating chamber for a small electronic kit on the mobile telephone, and a mechanism capable of quickly accessing the small electronic kit in order to provide the more reliable and convenient functions for the user.

### SUMMARY OF THE INVENTION

The invention is directed to an electronic device having a mechanism capable of opening and fixing a cover in a piecewise manner so that a user can conveniently take, place or mount small electronic kits or electronic elements without fully separating the cover from a body.

According to a first aspect of the present invention, an electronic device is provided. The electronic device includes a body, a first coupling portion and a cover. The body has a first accommodating chamber, a second accommodating chamber and a sliding slot. The first coupling portion is disposed on a bottom of the sliding slot. The cover includes a second coupling portion disposed on an inner wall of the cover. The second coupling portion is slidable inside the sliding slot. When the cover is closed with respect to the body, the cover covers the first accommodating chamber and the second accommodating chamber. When the cover slides along the sliding slot in a first direction, the second coupling portion interferes and is positioned with the first coupling portion such that the first accommodating chamber is exposed out of the cover and the second accommodating chamber is covered by the cover. When the cover continues to slide in the first direction, the second coupling portion passes the first coupling portion such that the cover is removable from the body and the first accommodating chamber and the second accommodating chamber are exposed out of the cover.

According to a second aspect of the present invention, an electronic device is provided. The electronic device includes a body, a first coupling portion and a cover. The body has a first accommodating chamber, a second accommodating chamber and a sliding slot. The first coupling portion is disposed between the first accommodating chamber and the second accommodating chamber. The cover includes a second coupling portion disposed on an inner wall of the cover. When the cover is closed with respect to the body, the cover covers the first accommodating chamber and the second accommodating chamber. When the cover slides along a sliding slot in a first direction, the second coupling portion interferes and is positioned with the first coupling portion such that the first accommodating chamber is exposed out of the cover and the second accommodating chamber is covered by the cover. When the cover continues to slide in the first direction, the second coupling portion passes the first coupling portion such that the cover is removable from the body and the first accommodating chamber and the second accommodating chamber are exposed out of the cover.

The invention will become apparent from the following detailed description of the preferred but non-limiting embodiments. The following description is made with reference to the accompanying drawings.

### BRIEF DESCRIPTION OF THE DRAWINGS

FIG. 1A is a schematic illustration showing a closed state of an electronic device according to a first embodiment of the invention.

FIG. 1B is a schematic illustration showing a decomposed state of the electronic device according to the first embodiment of the invention.

FIG. 1C is a schematic illustration showing relative positions of the hooks in the sliding slot when a cover and a body of the electronic device are in the closed state according to the first embodiment of the invention.

FIG. 2A is a schematic illustration showing the electronic device in a first open stage according to the first embodiment of the invention.

FIG. 2B is a schematic illustration showing relative positions of the hooks in the sliding slot when the electronic device of the first embodiment is in the first open stage.

FIG. 3A is a schematic illustration showing a second open stage of the electronic device according to the first embodiment of the invention.

FIG. 3B is a schematic illustration showing relative positions of the hooks in the sliding slot when the electronic device of the first embodiment is in the second open stage.

FIG. 4 is a side view showing a body of an electronic device according to a second embodiment of the invention.

FIG. 5A is a plane view showing a body of an electronic device according to a third embodiment of the invention.

FIG. 5B is a side view showing the body of the electronic device according to the third embodiment of the invention.

FIG. 6A is a plane view showing a body of an electronic device according to a fourth embodiment of the invention.

FIG. 6B is a plane view showing an inner side of a cover of the electronic device according to the fourth embodiment of the invention.

### DETAILED DESCRIPTION OF THE INVENTION

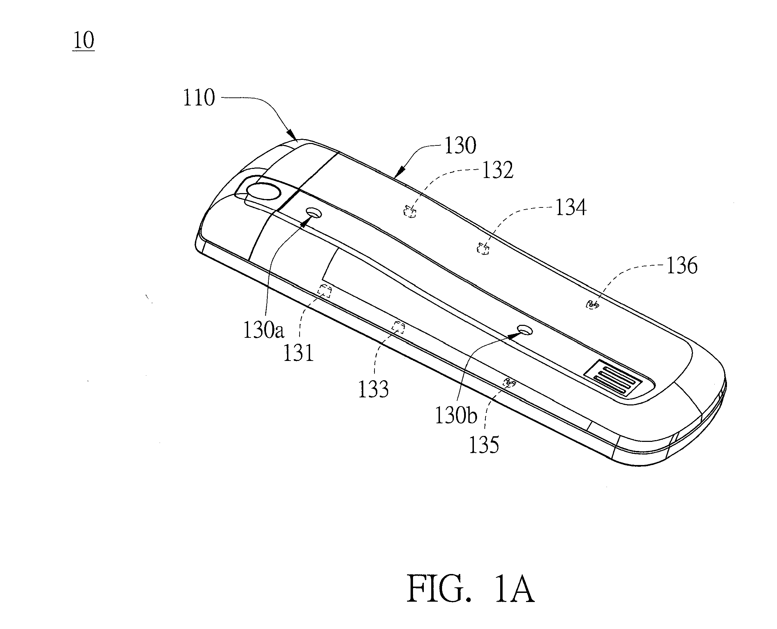

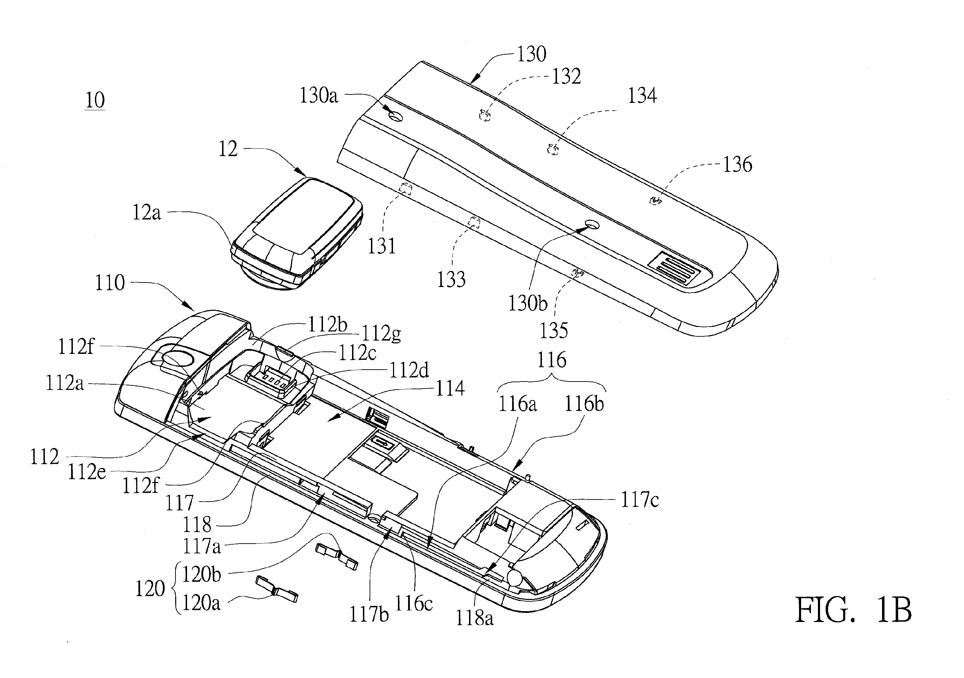

FIGS. 1A and 1B are schematic illustrations respectively showing a closed state and a decomposed state of an electronic device 10 according to a first embodiment of the invention. Referring to FIG. 1B, the electronic device 10 includes a body 110, a protrusion 120 and a cover 130. The body 110 has an accommodating chamber 112, an accommodating chamber 114 and a sliding slot 116. The protrusion 120 is preferably an elastomer. In this embodiment, the protrusion 120 is disposed on a metal elastic sheet mounted on an inner side of the body 110 and protrudes from the bottom of the sliding slot 116. However, the technology of the invention is not limited thereto. The protrusion 120 and the body 110 may also be integrally formed.

Preferably, the sliding slot 116 of this embodiment includes a sliding slot 116a and a sliding slot 116b symmetrically disposed on two opposite sides of the body 110. The protrusion 120 includes a protrusion 120a and a protrusion 120b, which symmetrically protrude on the bottoms of the sliding slot 116a and the sliding slot 116b.

The cover 130 includes a hook 131 disposed on the inner wall of the cover 130, and the hook 131 is slidable inside the sliding slot 116. When the cover 130 is closed with respect to the body 110, the cover 130 covers the accommodating chamber 112 and the accommodating chamber 114, as shown in FIG. 1A.

Preferably, the cover 130 further includes a hook 132. The hook 132 and the hook 131 are symmetrically disposed on two opposite inner walls of the cover 130.

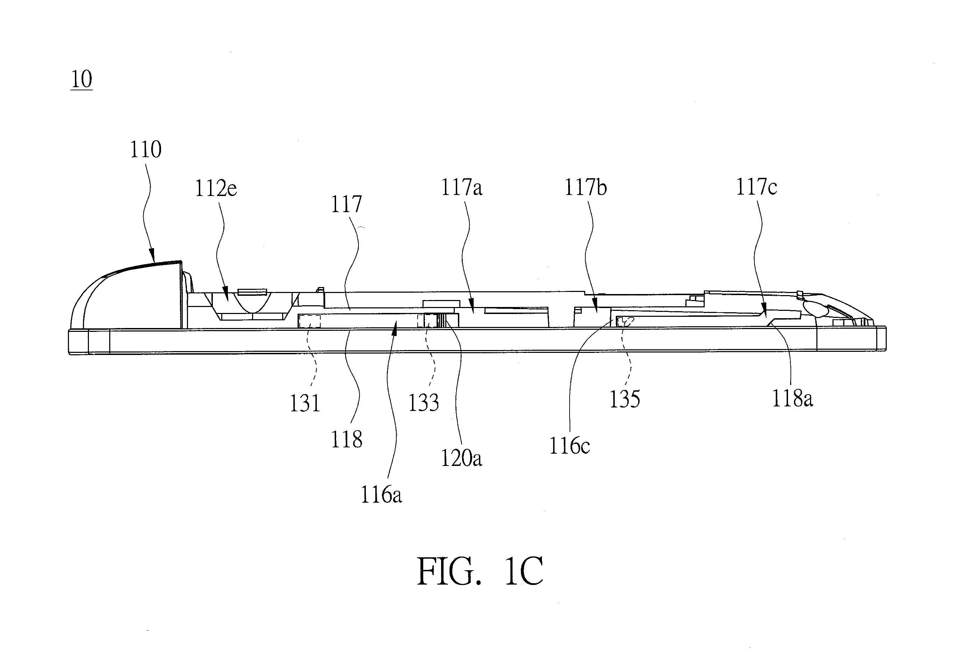

FIG. 1C is a schematic illustration showing relative positions of the hooks in the sliding slot when the cover and the body of the electronic device in the closed state according to the first embodiment of the invention. Referring to FIGS. 1C and 1A, the cover 130 further includes a hook 133, a hook 135, a hook 134 and a hook 136. The hooks 133 and 135 and the hooks 134 and 136 are symmetrically disposed on the two opposite inner walls of the cover 130. The hook 133 is disposed between the hook 131 and the hook 135, and the hook 134 is disposed between the hook 132 and the hook 136.

The sliding slot 116a has a stopper wall 116c. Similarly, a corresponding stopper wall (not shown) is also disposed at a corresponding portion in the sliding slot 116b. When the cover 130 is closed with respect to the body, the hooks 133 and 134 tightly lean against the protrusions 120a and 120b, respectively, and the hook 135 tightly leans against the stopper wall 116c. That is, the stopper wall 116c provides a supporting force for supporting the cover 130. At this time, the protrusion 120a and the stopper wall 116c are disposed between the hook 133 and the hook 135.

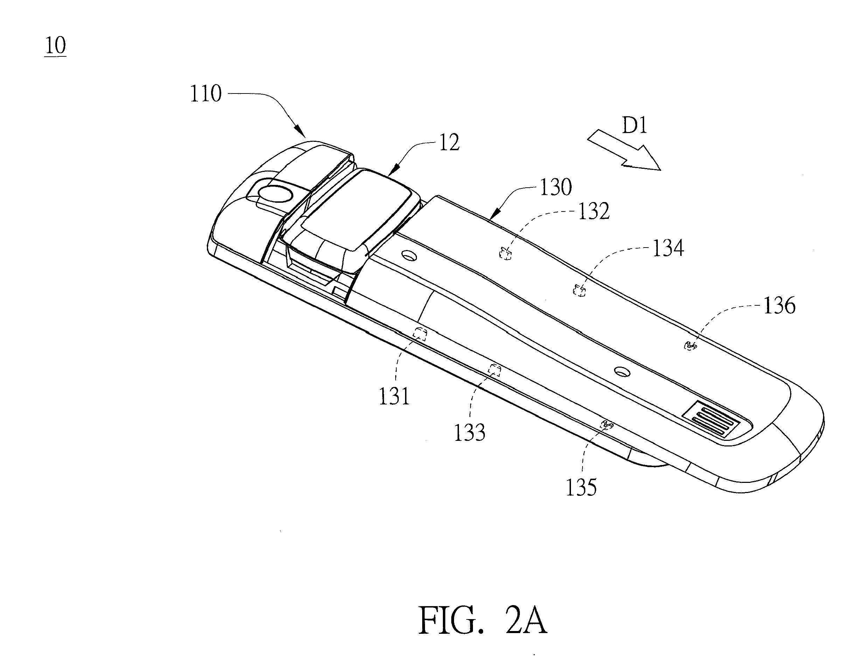

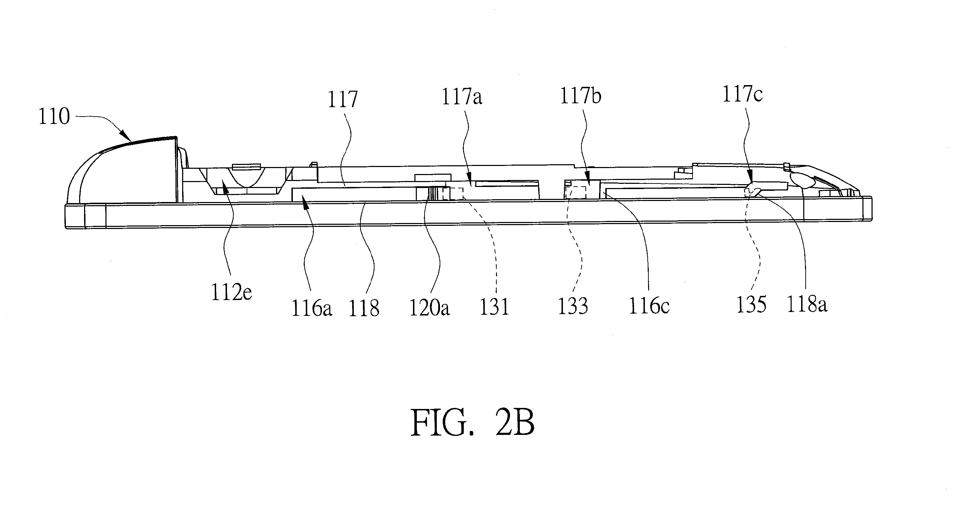

FIG. 2A is a schematic illustration showing the electronic device in a first open stage according to the first embodiment of the invention. FIG. 2B is a schematic illustration showing relative positions of the hooks in the sliding slot when the electronic device of the first embodiment is in the first open stage. As shown in FIGS. 2A and 2B, when the cover 130 slides along the sliding slot 116 in a direction D1, the hook 131 interferes with the protrusion 120a, wherein the protrusion 120a is a first coupling portion, and the hook 131 is a second coupling portion. At this time, if the user releases the cover 130, the elastic force of the protrusion 120a pushes the cover 130 back. If the user continues applying the force so that the hook 131 passes the protrusion 120a and is then positioned, the accommodating chamber 112 is exposed out of the cover 130 and the accommodating chamber 114 is covered by the cover 130.

Preferably, a bottom slot wall 118 of the sliding slot 116a has an inclined extending section 118a extending toward a top slot wall 117. When the hook 131 interferes and is positioned with the protrusion 120a, the inclined extending section 118a tightly leans against the hook 135. Similarly, the other sliding slot 116b also has a corresponding inclined extending section (not shown). When the hook 132 interferes and is positioned with the protrusion 120b, the other inclined extending section tightly leans against the hook 136.

In addition, the metal elastic sheet having the protrusion 120 preferably has unsymmetrical inclined surfaces on two sides of an apex of the protrusion 120. For example, the inclined surface on one side near the accommodating chamber 112 has the smaller slope, and the inclined surface on the other side away from the accommodating chamber 112 has the larger slope so that the user can slide the cover 130 in a smoother manner.

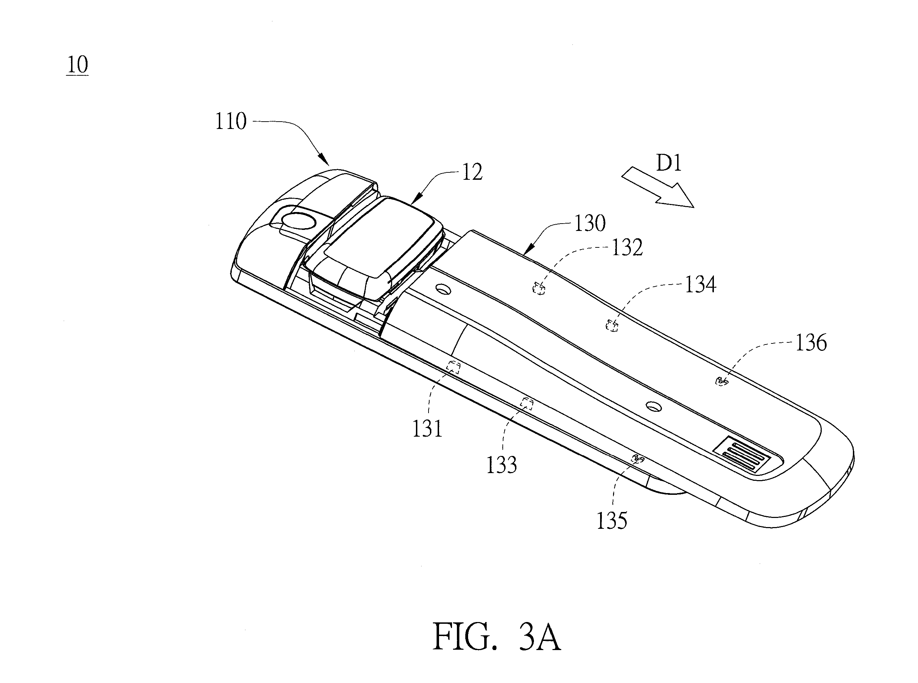

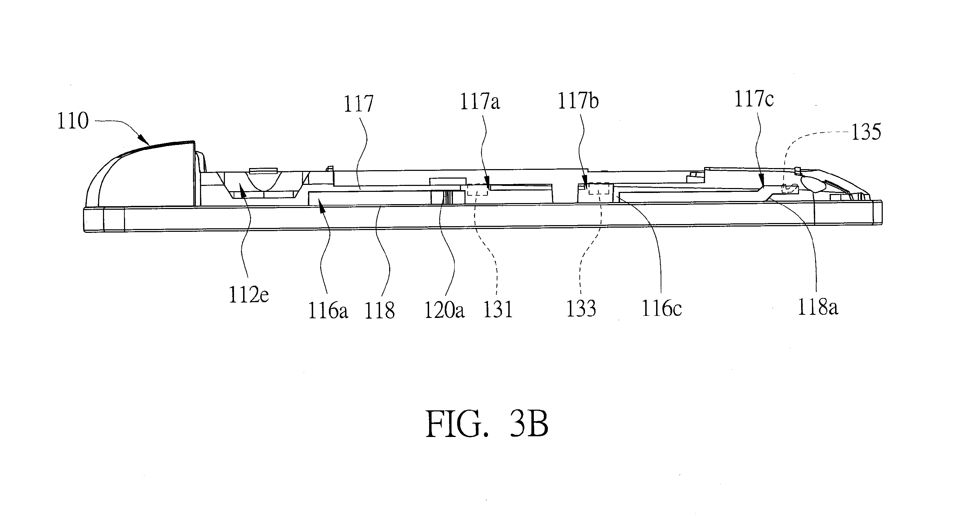

FIG. 3A is a schematic illustration showing a second open stage of the electronic device according to the first embodiment of the invention. FIG. 3B is a schematic illustration showing relative positions of the hooks in the sliding slot when the electronic device of the first embodiment is in the second open stage. As shown in FIG. 3B, when the cover 130 continues to slide in the direction D1, the hooks 131 and 132 respectively pass the protrusions 120a and 120b. At this time, the cover 130 may be removed from the body 110 such that the accommodating chamber 112 and the accommodating chamber 114 are exposed out of the cover 130.

As shown in FIG. 3B, the sliding slot 116a has the top slot wall 117, which has openings 117a, 117b and 117c, wherein the opening 117b is disposed between the opening 117a and the opening 117c. When the cover 130 is removed from the body 110, the hooks 131, 133 and 135 leave the sliding slot 116a from the openings 117a, 117b and 117c, respectively. At this time, the inclined extending section 118a changes the moving direction of the hook 135 in the sliding slot 116a so that the cover 130 is removed from the body 110.

One of ordinary skill in the art may easily understand that the invention is not limited to the illustrated embodiment. For example, the sliding slot 116 includes two sliding slots 116a and 116b, and the protrusion 120 includes two protrusions 120a and 120b. However, the effect of the invention may also be achieved if the sliding slot 116 includes only one single sliding slot and the protrusion 120 includes only one single protrusion. In addition, the hook and the protrusion may be exchanged, and the same coupling effect still can be achieved.

As shown in FIG. 1B, the accommodating chamber 112 is disposed adjacent to the accommodating chamber 114 in this embodiment, the accommodating chamber 112 is for accommodating an electronic element 12, and the accommodating chamber 114 is for accommodating a battery (not shown). For example, the electronic element 12 is a bluetooth earphone or a flash memory. The accommodating chamber 112 has an accommodating chamber bottom 112a and an accommodating chamber wall 112b surrounding the accommodating chamber bottom 112a. The accommodating chamber bottom 112a has a power connection terminal 112c and an annular projecting rib 112d. The annular projecting rib 112d surrounds the power connection terminal 112c. The annular projecting rib 112d protrudes from the accommodating chamber bottom 112a by a height greater than a height of the power connection terminal 112c. Therefore, when the electronic element 12 is placed in the accommodating chamber 112, it may be charged or transfer a signal through the power connection terminal 112c. The power connection terminal 112c may be protected by the annular projecting rib 112d and is free from being impacted.

Preferably, the electronic element 12 has a protrusion 12a, and the accommodating chamber wall 112b has a notch 112e. When the electronic element 12 is placed in the accommodating chamber 112, the notch 112e exposes the protrusion 12a so that the user can take out the electronic element 12 using the protrusion 12a.

Preferably, the accommodating chamber wall 112b has a pair of projections 112f. The projections 112f are disposed opposite to each other and on the inner side of the accommodating chamber wall 112b. When the electronic element 12 is placed in the accommodating chamber 112, the protrusion 12a of the electronic element 12 is disposed between the projections 112f and the accommodating chamber bottom 112a. In addition, a strip-like rib 112g corresponding to the notch 112e is disposed on the inner side of the accommodating chamber wall 112b. When the electronic element 12 is placed in the accommodating chamber 112, the protrusion 12a of the electronic element 12 is disposed between the strip-like rib 112g and the accommodating chamber bottom 112a. Thus, when the electronic element 12 is disposed in the accommodating chamber 112, it may be fixed through the projections 112f and the strip-like rib 112g.

Preferably, the cover 130 has a through hole 130a. When the cover 130 is closed with respect to the body 110, the through hole 130a corresponds to the accommodating chamber 112. Similarly, the cover 130 may also have a through hole 130b corresponding to the accommodating chamber 114. The user may know whether articles are placed in the accommodating chamber 112 and the accommodating chamber 114 through the through holes 130a and 130b.

### Second Embodiment

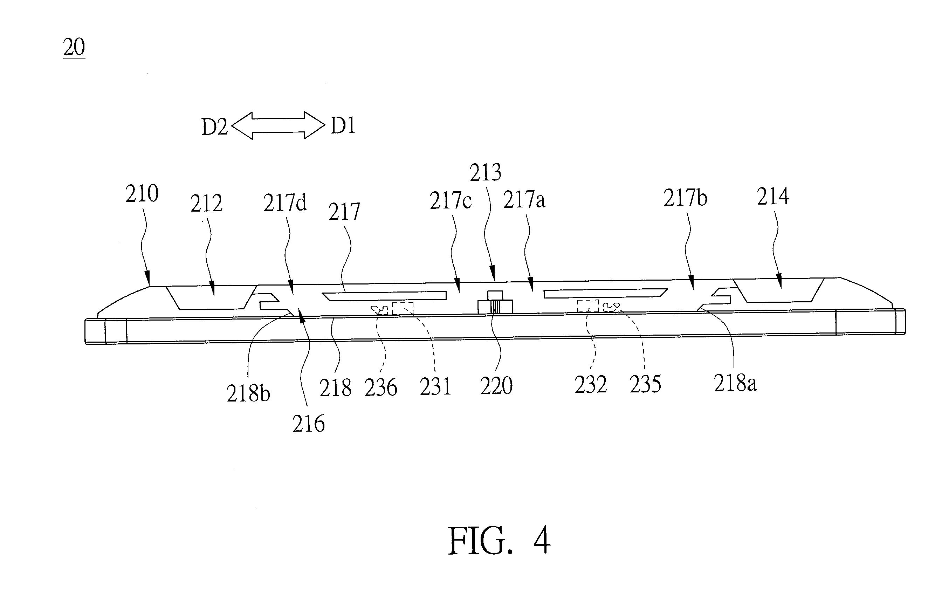

FIG. 4 is a side view showing a body of an electronic device according to a second embodiment of the invention. The difference between the electronic device 20 of the second embodiment and the electronic device 10 of the first embodiment is that the cover may be moved relative to two ends of the body to expose the accommodating chambers at two ends of the body. As shown in FIG. 4, a body 210 has an accommodating chamber 212 and an accommodating chamber 214 for accommodating different electronic elements. An accommodating chamber 213 for accommodating a battery is further formed between the accommodating chamber 212 and the accommodating chamber 214.

As shown in FIG. 4, when the cover (not shown) slides along a sliding slot 216 in the direction D1, a hook 231 interferes and is positioned with protrusion 220. At this time, a hook 235 tightly leans against an inclined extending section 218a on a bottom slot wall 218 such that the accommodating chamber 212 is exposed out of the cover and the accommodating chambers 214 and 213 are covered by the cover. When the cover continues to slide in the direction D1, the hook 231 passes the protrusion 220 such that the hooks 231 and 235 leave the sliding slot 216 from openings 217a and 217b of a top slot wall 217, respectively, the cover is removable from the body 210, and the accommodating chamber 212 and the accommodating chamber 214 are exposed out of the cover.

In addition, the cover also includes a hook 232 and a hook 236 disposed on the inner wall of the cover. When the cover is closed with respect to the body 210, the protrusion 220 is located between the hook 231 and the hook 232. When the cover slides along the sliding slot 216 in a direction D2 opposite to the direction D1, the hook 232 interferes and is positioned with the protrusion 220. At this time, the hook 236 tightly leans against an inclined extending section 218b of the bottom slot wall 218 such that the accommodating chamber 214 is exposed out of the cover and the accommodating chambers 212 and 213 are covered by the cover.

When the cover continues to slide in the direction D2, the hook 232 passes the protrusion 220 and the cover is removed from the body 210. The hooks 232 and 236 leave the sliding slot 216 from openings 217c and 217d of the top slot wall 217 such that the accommodating chambers 212, 214 and 213 are exposed out of the cover.

### Third Embodiment

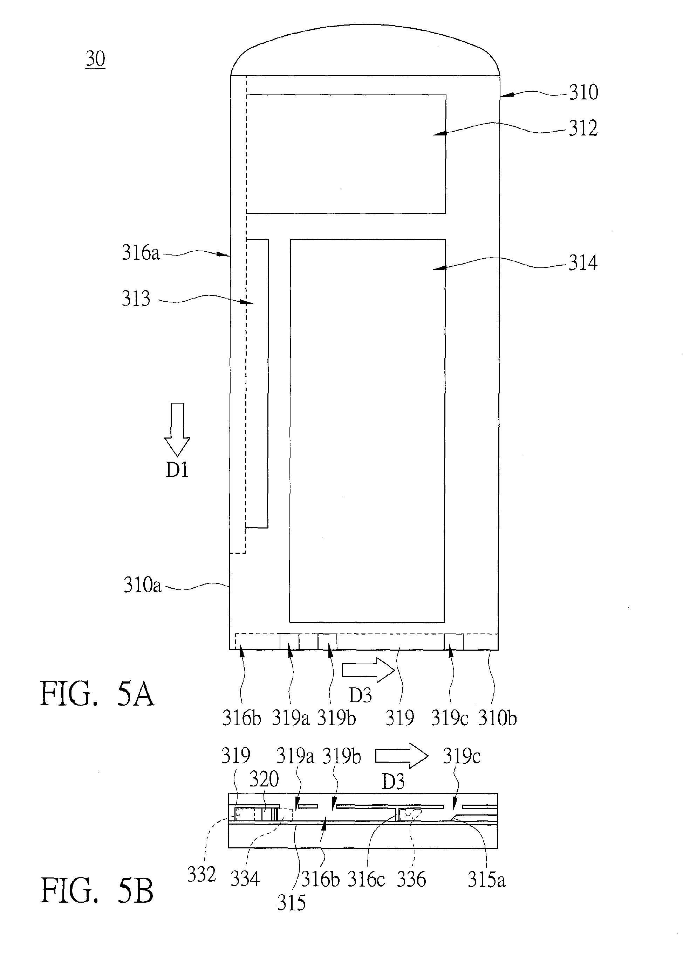

FIG. 5A is a plane view showing a body of an electronic device 30 according to a third embodiment of the invention. FIG. 5B is a side view showing the body of the electronic device according to the third embodiment of the invention. As shown in FIGS. 5A and 5B, the difference between the electronic device 30 of the third embodiment and the electronic device 10 of the first embodiment is that the cover of the electronic device 30 may slide in two directions perpendicular to each other and may be positioned.

Referring to FIG. 5A, a body 310 further includes an accommodating chamber 313, a sliding slot 316a and a sliding slot 316b. The sliding slot 316a is disposed on a lateral side 310a of the body 310, and the sliding slot 316b is disposed on the other lateral side 310b of the body 310. The lateral side 310b is substantially perpendicular to the lateral side 310a. The structure of the sliding slot 316a and the sliding slot 116a of the first embodiment are substantially the same such that the cover can slide along the sliding slot 316a in the direction D1. Herein, detailed descriptions thereof will be omitted.

As shown in FIG. 5B, a protrusion 320 protrudes on the bottom of the sliding slot 316b. The cover (not shown) further includes hooks 332, 334 and 336, which are disposed on the inner wall of the cover and are slidable inside the sliding slot 316b.

When the cover is closed with respect to the body 310, the hook 334 tightly leans against the protrusion 320 and the hook 336 tightly leans against a stopper wall 316c.

When the cover slides along the sliding slot 316b in a direction D3 substantially perpendicular to the direction D1, the hook 332 interferes and is positioned with the protrusion 320. At this time, the hook 336 tightly leans against an inclined extending section 315a of a bottom slot wall 315 such that the accommodating chamber 313 is exposed out of the cover and an accommodating chamber 312 and an accommodating chamber 314 are covered by the cover. Preferably, the accommodating chamber 313 is for accommodating a touch pen.

When the cover continues to slide in the direction D3, the hook 332 passes the protrusion 320 such that the cover is removable from the body 310, the hooks 332, 334 and 336 respectively leave the sliding slot 316b from openings 319a, 319b and 319c of a top slot wall 319, and the accommodating chambers 312, 313 and 314 are exposed out of the cover.

### Fourth Embodiment

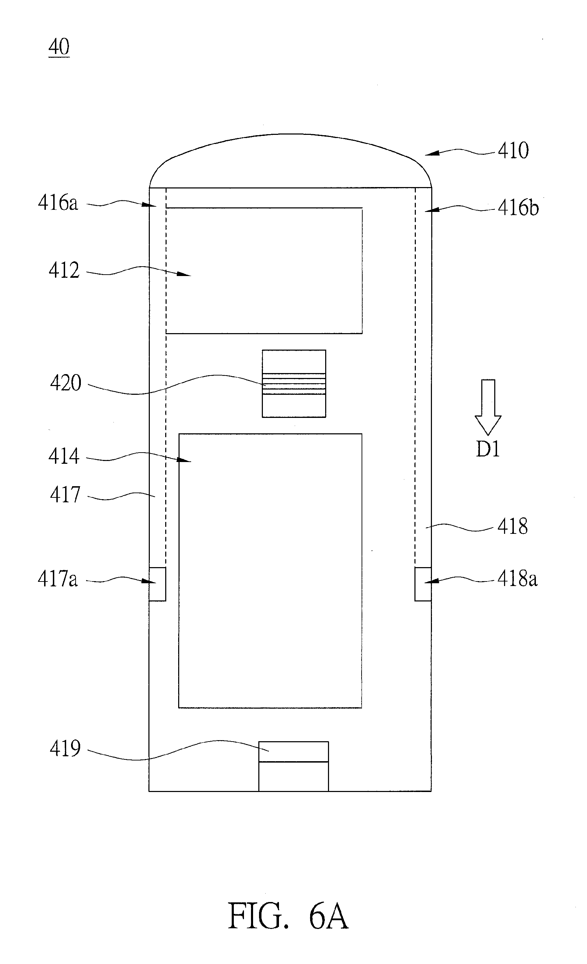

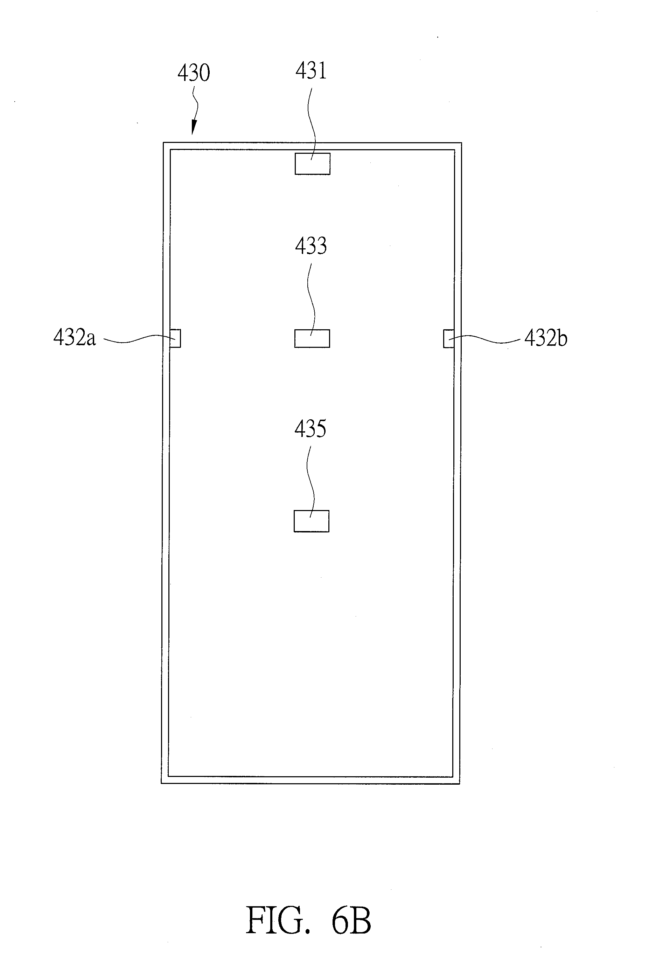

FIG. 6A is a plane view showing a body of an electronic device 40 according to a fourth embodiment of the invention. FIG. 6B is a plane view showing an inner side of the cover of the electronic device according to the fourth embodiment of the invention. As shown in FIGS. 6A and 6B, the difference between the electronic device 40 of the fourth embodiment and the electronic device 10 of the first embodiment is that the coupling portion of the body and the cover of the electronic device 40 is located between two accommodating chambers.

As shown in FIG. 6A, a body 410 has an accommodating chamber 412 and an accommodating chamber 414, and a coupling portion 420 is disposed between the accommodating chamber 412 and the accommodating chamber 414. A sliding slot 416a and a sliding slot 416b are respectively disposed on two sides of the body 410. A top slot wall 417 of the sliding slot 416a and a top slot wall 418 of the sliding slot 416b respectively have an opening 417a and an opening 418a. In addition, a distal end of the body 410 has an inclined extending section 419, which protrudes from the surface and extends slantingly.

As shown in FIG. 6B, a cover 430 includes coupling portions 431, 433 and 435 disposed on an inner wall of the cover 430. When the cover 430 is closed with respect to the body 410, the cover 430 covers the accommodating chamber 412 and the accommodating chamber 414. At this time, the coupling portion 433 tightly leans against the coupling portion 420 so that the elastic force of the coupling portion 420 makes the cover 430 be closed with respect to the body 410. A hook 432a and a hook 432b are also respectively disposed on two sides of the inner wall of the cover 430. When the cover 430 is combined with the body 410, the hook 432a and the hook 432b respectively slide in the sliding slot 416a and the sliding slot 416b.

As shown in FIG. 6A, when the cover 430 slides along sliding slots 416a and 416b in the direction D1, a coupling portion 431 interferes and is positioned with the coupling portion 420. At this time, the hook 435 tightly leans against the inclined extending section 419. At this time, the accommodating chamber 412 is exposed out of the cover 430 and the accommodating chamber 414 is covered by the cover 430.

When the cover 430 continues to slide in the direction D1, the coupling portion 433 passes the coupling portion 420 such that the cover 430 is removable from the body 410 and the accommodating chamber 412 and the accommodating chamber 414 are exposed out of the cover 430.

According to the electronic device of the invention, the protrusion is formed in the sliding slot so that the protrusion and the hook on the inner side of the cover form the positioning mechanism. Thus, when the cover is opened, one accommodating chamber may be exposed and then the cover is positioned. According to such a design, the user can easily take the electronic element from the accommodating chamber or place the electronic element into the accommodating chamber. According to different design types of sliding slots, the cover may slide in two opposite directions and then be positioned such that different accommodating chambers are exposed. Alternatively, the sliding slot may be positioned after the cover slides in the two directions perpendicular to each other such that different accommodating chambers are exposed. Alternatively, the coupling portion may be disposed between two accommodating chambers. Thus, the coupling portion on the inner side of the cover interferes with the coupling portion on the body so that the cover is positioned after the cover slides to expose the accommodating chamber.

While the invention has been described by way of examples and in terms of preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. An electronic device(10, 20, 30), comprising a body(110, 210, 310) having a first accommodating chamber(112, 212, 312), a second accommodating chamber(114, 214, 314) and a sliding slot(116, 216, 316a) **characterized in that:**
a first coupling portion disposed on a bottom of the sliding slot(116, 216, 316a); and
a cover(130) comprising a second coupling portion, which is disposed on an inner wall of the cover(130) and is slidable inside the sliding slot(116, 216, 316a), wherein when the cover(130) is closed with respect to the body(110, 210, 310), the cover(130) covers the first accommodating chamber(112, 212, 312) and the second accommodating chamber(114, 214, 314);
wherein when the cover(130) slides along the sliding slot(116, 216, 316a) in a first direction, the second coupling portion interferes and is positioned with the first coupling portion such that the first accommodating chamber(112, 212, 312) is exposed out of the cover(130) and the second accommodating chamber(114, 214, 314) is covered by the cover(130); and
wherein when the cover(130) continues to slide in the first direction, the second coupling portion passes the first coupling portion such that the cover(130) is removable from the body(110, 210, 310) and the first accommodating chamber(112, 212, 312) and the second accommodating chamber(114, 214, 314) are exposed out of the cover(130).

2. The electronic device according to claim 1, wherein the first coupling portion is a protrusion(120, 220) protruding on the bottom of the sliding slot(116, 216, 316a), and the second coupling portion is a first hook(131, 231).

3. The electronic device according to claim 2, wherein the sliding slot(116, 216, 316a) has a top slot wall(117, 217), the top slot wall(117, 217) has a first opening(117a, 217a), and the first hook(131, 231) leaves the sliding slot(116, 216, 316a) from the first opening(117a, 217a) when the cover(130) is removed from the body(110, 210, 310).

4. The electronic device according to claim 3, wherein the cover further comprises a second hook(133), the second hook(133) is disposed on the inner wall of the cover(130), and the second hook(133) tightly leans against the protrusion(120) when the cover(130) is closed with respect to the body(110);
wherein the top slot wall(117) of the sliding slot(116) has a second opening(117b), and the second hook(133) leaves the sliding slot(116) from the second opening(117b) when the cover(130) is removed from the body(110).

5. The electronic device according to claim 4, wherein the cover further comprises a third hook(135), the third hook(135) is disposed on the inner wall of the cover(130), the second hook(133) is disposed between the first hook(131) and the third hook(135), the top slot wall(117) of the sliding slot(116) has a third opening(117c), the second opening(117b) is disposed between the first opening(117a) and the third opening(117c), and the third hook(135) leaves the sliding slot(116) from the third opening(117c) when the cover(130) is removed from the body(110).

6. The electronic device according to claim 2, wherein:
the body(310) further comprises a third accommodating chamber(313), the body(310) further comprises a second sliding slot(316b), the sliding slot(316a) is disposed on a first side of the body(310), the second sliding slot(316b) is disposed on a second side of the body(310), and the second side is substantially perpendicular to the first side;
the electronic device(30) further comprises a second protrusion(320) protruding on a bottom of the second sliding slot(316b);
the cover further comprises a second hook(332), which is disposed on the inner wall of the cover and is slidable inside the second sliding slot(316b); and
when the cover slides along the second sliding slot(316b) in a second direction, the second hook interferes and is positioned with the second protrusion(320) such that the third accommodating chamber(313) is exposed out of the cover and the first accommodating chamber(312) and the second accommodating chamber(314) are covered by the cover, wherein the second direction is substantially perpendicular to the first direction.

7. The electronic device according to claim 2, wherein:
the cover further comprises a second hook(232) disposed on the inner wall of the cover;
when the cover is closed with respect to the body(210), the protrusion(220)is located between the first hook(231) and the second hook(232); and
when the cover slides along the sliding slot(216) in a second direction opposite to the first direction, the second hook(232) interferes and is positioned with the protrusion(220), such that the second accommodating chamber(214) is exposed out of the cover.

8. The electronic device according to claim 7, wherein the body(210) further comprises a third accommodating chamber(213), wherein the third accommodating chamber is located between the first accommodating chamber(212) and the second accommodating chamber(214), the third accommodating chamber(213) is for accommodating a battery.

9. The electronic device according to claim 1, wherein the first accommodating chamber(112, 212, 312) has an accommodating chamber bottom(112a) and an accommodating chamber wall(112b) surrounding the accommodating chamber bottom(112a), wherein the accommodating chamber bottom(112a) has:
a power connection terminal(112c); and
an annular projecting rib(112d) surrounding the power connection terminal(112c), wherein the annular projecting rib(112b) protrudes from the accommodating chamber bottom(112a) by a height greater than a height of the power connection terminal(112c).

10. The electronic device according to claim 1, wherein the first accommodating chamber(112, 212, 312) is for accommodating an electronic element(12), the electronic element(12) has a protrusion(12a), the accommodating chamber wall(112b) has a notch(112e), and the protrusion(12a) is exposed from the notch(112e) when the electronic element(12) is disposed in the first accommodating chamber(112, 212, 312).

11. The electronic device according to claim 1, wherein the first coupling portion(120, 220) is an elastomer and is disposed on an elastic sheet, the elastic sheet has unsymmetrical inclined surfaces on two sides of an apex of the first coupling portion(120, 220).

12. An electronic device(40), comprising a body(410) having a first accommodating chamber(412), a second accommodating chamber(414) and a sliding slot(416a) **characterized in that**:
a first coupling portion(420)disposed between the first accommodating chamber(412) and the second accommodating chamber(414); and
a cover(430) comprising a second coupling portion(431) disposed on an inner wall of the cover(430), wherein:
the cover(430) covers the first accommodating chamber(412) and the second accommodating chamber(414) when the cover(430) is closed with respect to the body(410);
when the cover(430) slides along the sliding slot(416a) in a first direction, the second coupling portion(431) interferes and is positioned with the first coupling portion(420) such that the first accommodating chamber(412) is exposed out of the cover(430) and the second accommodating chamber(414) is covered by the cover(430); and
when the cover(430) continues to slide in the first direction, the second coupling portion(431) passes the first coupling portion(420) such that the cover(430) is removable from the body(410), and the first accommodating chamber(412) and the second accommodating chamber(414) are exposed out of the cover(430).
